# EUROPEAN PATENT APPLICATION

(11) **EP 1 621 839 A1**
(43) Date of publication of application: **01.02.2006**
(21) Application number: 05291050.2
(22) Date of filing: 16.05.2005
(51) Int. Cl.: F25D 29/00

(54) **Refrigerator and guide apparatus for display of refigerator**

(30) Priority: 31.07.2004 KR 2004060710
(71) Applicant: LG ELECTRONICS INC., Seoul (KR)
(72) Inventor: Kim, Yang Gyu, Daelim 3-Dong, Youngdungpo-Gu (KR); Lee, Youn Seok, Deokyang-gu Goyang-si Gyeonggi-do (KR); Oh, Joon Hwan, Gangseo-gu (KR)
(74) Representative: Pichat, Thierry

(57) **Abstract**

There is provided a refrigerator (1) and guide apparatus (100) for a display (300) of a refrigerator (1). The guide apparatus (100) includes two extendable arms (120) and a guide link guiding the movement of the extendable arms (120). The guide apparatus (100) is installed between the display (300) and the refrigerator (1) to smoothly extend and retract the display (300) in forward and backward directions.

## Description

### BACKGROUND OF THE INVENTION

### Field of the Invention

The present invention relates to a refrigerator, and more particularly, to a guide apparatus for a display installed on a refrigerator door. Still more particularly, the guide apparatus is designed such that the display installed on the refrigerator can be smoothly and straightforwardly extended from the refrigerator and the display can be swiveled at a predetermined angle without deviation, thereby preventing the display from interfering with the outer wall or other parts of the refrigerator.

### Description of the Related Art

A refrigerator is an electrical appliance for cooling or freezing food to preserve the food. The refrigerator includes a main body, in which a chilling chamber and a freezing chamber are formed to store food. The chilling chamber is kept at a low temperature above the freezing point of water, and the freezing chamber is kept at a low temperature below the freezing point. Also, the refrigerator includes a chilling chamber door and a freezing chamber door to selectively open the chilling chamber and the freezing chamber. The chilling chamber and freezing chamber are supplied with cooling air that is cooled by a refrigerant. The refrigerant is sequentially compressed, condensed, expanded, and evaporated to take heat from the air inside the refrigerator to produce the cooling air.

To increase user's convenience, some of the refrigerators are being provided at a front of its door with a water purifier system or a display.

The display shows the temperature and humidity inside the refrigerator. Also, the display shows the state of the food inside of the refrigerator. Further, a wide-screen display can be mounted on the front of the refrigerator to provide various services for the users. For example, the users can connect Internet and watch television broadcasting and movies with the wide-screen display. For this purpose, a wider display occupying the most area of the refrigerator may be mounted on the refrigerator door.

A flat type display such as a slim LCD may be suitable for the refrigerator because its thin thickness decreases the insulation thickness of the refrigerator door even less. The flat display, however, has a drawback in that when the user views the display at a certain angle the refrigerator door handle may disposed between the display and the user, creating a dead angle. Moreover, since LCDs and PDPs, representative flat type displays, have a narrow viewing angle, the viewer can view clear images only when the viewer views the LCD/PDP within a limited angle range.

To obviate such problems, an installation structure of the display is disclosed in Korean Patent Application No. 10-2004-0033709, filed on JUN. 19, 2000, and entitled "The installation structure of a display unit for a refrigerator", in which the display can be tilted in up and down directions.

In the disclosed invention, however, an accommodation recess defined in a refrigerator door must be deepened to allow tilting motion of a display installed therein, affecting the thickness of the refrigerator door. That is, insulation material should be added to supplement the decreased insulation thickness.

Further, the disclosed invention is designed such that a hinge mechanism formed at each side of the display only allows the display to be tilted in up and down directions. Therefore, the narrow viewing angle in left and right directions and the dead angle due to the refrigerator door handle are not obviated.

### SUMMARY OF THE INVENTION

Accordingly, the present invention is directed to a refrigerator and guide apparatus for a display of a refrigerator that substantially obviates one or more problems due to limitations and disadvantages of the

### related art.

An object of the present invention is to provide a refrigerator and guide apparatus for a display of a refrigerator, in which an accommodation portion accommodating the display can be formed to have a minimized depth to prevent decrease in the insulation thickness of a refrigerator door.

Another object of the present invention is to provide a refrigerator and guide apparatus for a display of a refrigerator, which removes user's inconvenience due to the narrow viewing angle of the display.

A further another object of the present invention is to provide a refrigerator and guide apparatus for a display of a refrigerator, which removes user's inconvenience due to the dead angle caused by a door handle disposed between the user and the display.

A still further another object of the present invention to provide a refrigerator and guide apparatus for a display of a refrigerator, which enables the display to be extended straightforwardly from the refrigerator without interference with other parts of the refrigerator such a door handle and an outer case. Therefore, the display can be used more conveniently.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, a refrigerator includes: a chamber kept at a low temperature; a door selectively opening and closing the chamber; an accommodation portion formed at an outer surface of the door; a display extendable from the accommodation portion; and at least one pair of extendable arms connected between the display and the accommodation portion.

In another aspect of the present invention, a refrigerator includes: a chamber kept at a low temperature; a door selectively opening and closing the chamber; an accommodation portion formed at an outer surface of the door; a display extendable from the accommodation portion; a first extendable arm hinged between the display and a first portion of the accommodation portion; and a second extendable arm hinged between the display and a second portion of the accommodation portion, the second portion being symmetrical to the first portion, wherein the first and second extendable arms include at least two members slidable in the same direction for extending and retracting motions.

In a further another aspect of the present invention, there is provided a guide apparatus for a display of a refrigerator, including: a fixing bracket fixed to the display; a mounting panel fixed to the refrigerator; two extendable arms connecting a portion of the fixing bracket with both sides of the mounting panel; and two guide links connecting the mounting panel with the extendable arms to enable the two extendable arms to be extended by the same length, the two guide links making contact with each other at at least one point.

According to the present invention, the user can operate the display more easily and view the display without inconveniences caused by the dead angle and the narrow viewing angle.

Further, the display is prevented from interference with the refrigerator when the display is extended and retracted, thereby increasing durability of the display.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:

Fig. 1 is a perspective view of a refrigerator according to the present invention;

Fig. 2 is a perspective view of a refrigerator according to the present invention, in which a display is separated from the refrigerator;

Fig. 3 is an exploded perspective view of a guide unit according to the present invention;

Fig. 4 is a cross-sectional view of a refrigerator door according to the present invention, in which a display is located in a retracted position; and

Fig. 5 is a cross-sectional view of a refrigerator door according to the present invention, in which a display is being extended or is swiveled after extended.

### DETAILED DESCRIPTION OF THE INVENTION

Reference will now be made in detail to the preferred embodiments of the present invention, examples of which are illustrated in the accompanying drawings.

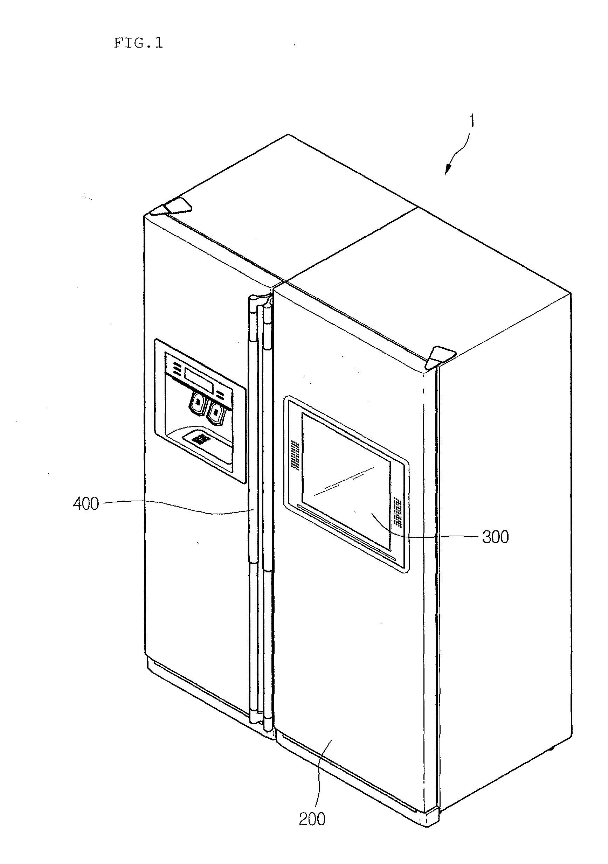

Fig. 1 is a perspective view of a refrigerator according to the present invention.

Referring to Fig. 1, a refrigerator 1 includes a door 200 to selective open the refrigerator 1, a door handle 400 for a user to pull the door 200 to open the refrigerator 1, and a display 300 mounted on the door 200. The display 300 is extendable from the door 200.

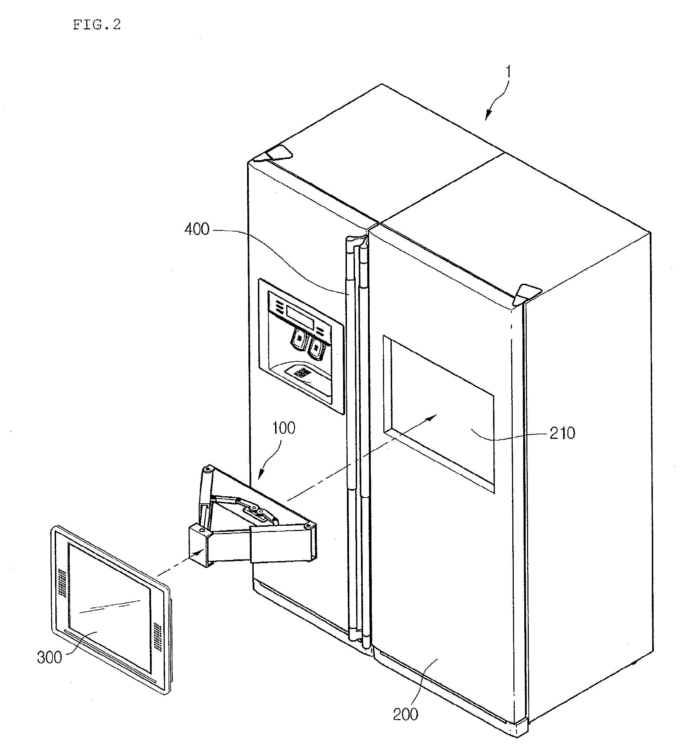

Fig. 2 is a perspective view of a refrigerator according to the present invention, in which a display is separated from the refrigerator. A structure related to the extending motion of the display 300 from the door 200 will now be described with reference to Fig. 2.

Referring to Fig. 2, the door 200 defines a recessed accommodation portion 210 in a front to accommodate the display 300. When assembled, a guide unit 100 is connected between the accommodation portion 210 and the display 100 to guide extending and retracting motions of the display 300 from and into the accommodation portion 210.

An operation of the guide unit 100 will now be described.

When the display 300 is not used or is used in a retracted position, the guide unit 100 holds the display 330 to be securely accommodated in the accommodation portion 210. When a user wants to view the display 300 more closely, or the user is located at a dead angle area where other part such as the door handle 400 is disposed between the user and the display 300, or the user is located outside the viewing angle range of the display 300, the display 300 can be moved to a desired location. That is, the display 300 can be extended from the retraced position in the accommodation portion 210 and then its orientation can be adjusted. The guide unit 100 enables smooth and secure extending and adjusting motions of the display 300.

The guide unit 100 shifts the display in a linear direction when extending the display from the accommodation portion 210 to prevent interference with neighboring parts such as the door handle 400. Also, the guide unit 100 stably supports the weight of the display 300. Further, the guide unit 100 enables the display 300 to be securely accommodated in the accommodation portion 210 that is shallow, such that decrease in the insulation thickness of the door 200 due to the accommodation portion 210 can be minimized. A structure of the guide unit 100 which provides above-mentioned functions will now be described.

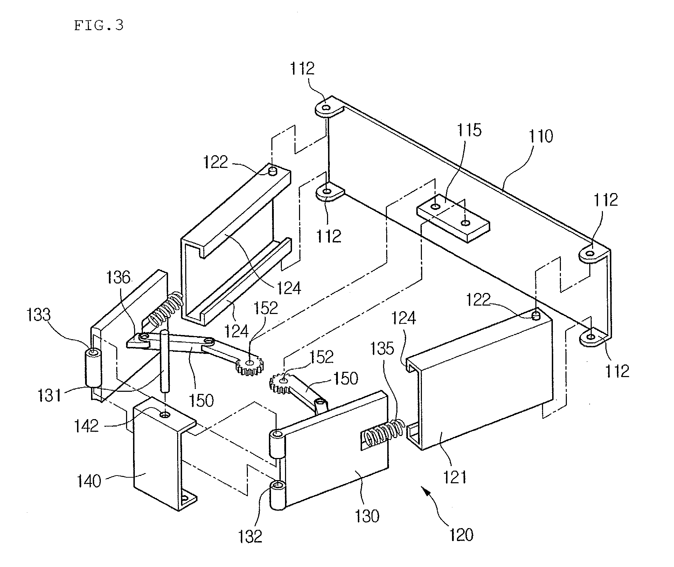

Fig. 3 is an exploded perspective view of a guide unit according to the present invention.

Referring to Figs. 2 and 3, when assembled, the guide unit 100 is disposed in the accommodation portion 210 to connect the display 300 with the door 200 and to extend the display 300 from the accommodation portion 210.

The guide unit 100 includes a mounting panel 110, a fixing bracket 140, and extendable arms 120. When assembled, the mounting panel 110 is fixed to the accommodation portion 210, the fixing bracket 140 supports the display 300, and the extendable arms 120 are connected between the mounting panel 110 and the fixing bracket 140.

Since the extendable arms 120 are hinged between the mounting panel 110 and the fixing bracket 140, the extendable arms 120 are capable of pivoting with respect to the mounting panel 110 and the fixing bracket 140. Also, the extendable arms 120 are capable of extending as they swivel outwardly, such that the extending motion of the display 300 can be stably supported by the extendable arms 120.

A structure of the guide unit 100 will now be more fully described.

The mounting panel 110 is fixed to a predetermined portion on the accommodation portion 210. For example, fasteners such as volts and rivets may be used to fix the mounting panel 110 to the accommodation portion 210, or the mounting panel 110 may be welded to the accommodation portion 210.

The mounting panel 110 includes hinge socket portions 112 at each side to couple with hinge pin portions 122 formed on a side guide 121 of each extendable arm 120. Each of the extendable arms 120 includes the side guide 121 and a side arm 130. The side arm 130 is movably installed in the side guide 121 to enable the extension of the extension arm 120. The side guide 121 is formed with guard walls 124 to prevent the side arm 130 from deviation, such that the movement of the side arm 130 can be stably guided in a length direction.

In operation, the side arm 130 slides in the side guide 121, and the guard walls 124 prevents the side arm 130 departing from the side guide 121 in a lateral direction to restrict the movement of the side arm 130 in the length direction. A stopping structure may be formed on the inner wall of the side guide 121 to restrict the extending motion of the side arm 130 within a limited range. In the accompanying drawings, though each part included in the extendable arm 120 has a rectangular section, it can have other shapes. For example, a side arm having a circular section may be slidably inserted in a side guide having a circular section, such as a foldable antenna used in a cellular phone or a radio set.

An elastic member such s compression spring 135 is disposed between the side guide 121 and the side arm 130 to urge the side arm 130 toward an extended position. In stead of the compression spring 135, other types of springs such as a leaf spring and a spiral spring can be used. For example, when the spiral spring is used, the center of the spiral spring may be disposed at a predetermined portion of the side arm 130 and an end of the spiral spring may be abutted against a predetermined portion of the side guide 121. This configuration of the spiral spring may be seen in a watch having a spiral spring.

The side arms 130 include knuckles 132 and 133 that are aligned with hinge holes 142 defined in the fixing bracket 140. A hinge pin 131 is inserted in the hinge holes 142 and the knuckles 131 and 133. Therefore, the fixing bracket 140 can be swiveled with respect to the side arms 130, and the side arms 130 can securely support the fixing bracket 140.

The fixing bracket 140 is ⊏-shaped with its open back facing toward the mounting panel 110. Inside the fixing bracket 140, a space is defined to receive the side arms 130. In detail, the fixing bracket 140 is opened at it back to receive some portions of the side arms 130 when the side arms 130 swivel around the hinge holes 142. That is, the fixing bracket 140 covers the side arms 130 when the side arms 130 are retracted. Also, the fixing bracket 140 prevents the side arms 130 from protruding outward.

Guide links 150 are connected between the side arms 130 and the mounting panel 110. The guide links 150 include one ends rotatably connected to a link bracket 115 formed on the mounting panel 110 and the other ends rotatably connected to link fixtures 136 respectively formed on the side arms 130. The one ends of the guide links 150 are respectively formed with gears 152 are engaged with each other. The guide links 150 are rotated to guide the extendable arms 120 when the extendable arms 120 is extended and retracted. Since the guide links 150 are rotatably connected between the mounting panel 110 and the side arms 130 and the gears 152 of the guide links 150 are engaged with each other, the display 300 can be extended straightforwardly from the accommodation portion 210. In detail, when one side of the display 300 tends to extends ahead of the other side of the display 300, one of the gears 152 near the one side of the display 300 rotates the other one of the gears 152 to push the side arm 130 adjacent to the other side of the display 300, such that the extendable arms 120 can be extended equally to push the display 300 without deviation.

When assembled, the mounting panel 110 is fixed to the accommodation portion 210 of the door 200 and the fixing bracket 140 is fixed to a back of the display 300. The guide unit 100 having above mentioned structure has a triangular shape when assembled.

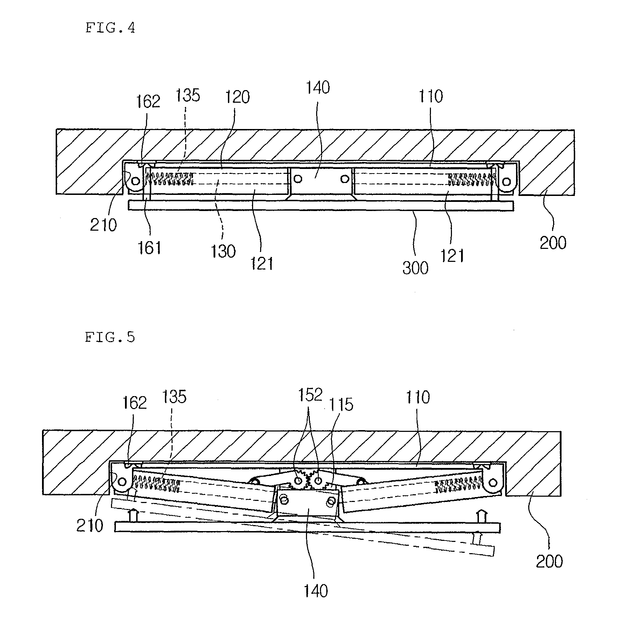

To stable hold the display 300 in the retracted position, the display 300 is formed with hooks (refer to 161 in Fig. 4) at its back, and the mounting panel 110 is formed with hook holders (refer to 162 in Fig. 4). For the same purpose, other fasteners can be used instead of the hooks 161 and the hook holders 12. For example, a fastener utilizing frictional force, a magnet fastener, and a Velcro fastener can be used.

An operation of the present invention will now be more fully described with reference to cross-sectional views of a refrigerator door.

Fig. 4 is a cross-sectional view of a refrigerator door according to the present invention, in which a display is located in a retracted position, and Fig. 5 is a cross-sectional view of a refrigerator door according to the present invention, in which a display is being extended.

Referring to Figs. 4 and 5, when a user views the display 300 that is retracted in the accommodation portion 210 of the door 200, the door handle 400 can be disposed between the user and the display 300 to disturb the user's viewing or the user cannot view clear images due to the narrow viewing angle of the display 300. In this case, the user can extend the display 300 from the retracted position and swivel the display 300 to a desired direction.

The extending movement of the display 300 will now be more fully described. After the hooks 161 are released from the hook holders 162, the elastic force of the compression springs 135 pushes the side arms 130 outward from the side guides 121 to extend the display 300 from the door 200.

When the display 300 is extended, the guide links 150 connected between the mounting panel 110 and the side arms 130 are operated. In detail, since the extending motions of the extendable arms 120 are associated with each other by the guide links 150 of which the gears 152 are engaged with each other, the extendable arms 120 can be extended equally. Therefore, the fixing bracket 140 on which the display 300 is fixed can be extended only in a perpendicular direction to the door 200 to prevent the display 300 from interfering with other parts of the door 200. After the display 300 is extended, the user can view the display 300 without obstruction of the door handle 400.

Further, since the extendable arms 120 are hinged to the fixing bracket 140 on the same hinge axis, the extended fixing bracket 140 can be swiveled on the hinge axis. Therefore, the user can swivel the extended display 300 right or left to view the display 300 without inconveniences caused by the door handle 400 and the narrow viewing angle of the display 300.

The extended display 300 can be retracted into the accommodation portion 210 by pushing the display 300 inwardly. When the display 300 is retracted, it is secured in the retracted position by the hooks 161 and the hook holders 162. That is, the display 300 can be stably accommodated in the accommodation portion 300 when it is not applied with external force.

According to the present invention, the display can be straightforwardly extended from the accommodation portion without deviation, thereby preventing the display from interference with other parts of the refrigerator such as the door handle.

Further, since the user can swivel the display in a desired direction to remove the obstruction of the door handle or the inconvenience due to the narrow viewing angle of the display, such that the user can view clear images regardless of his/her location.

Furthermore, the extending and swiveling structure of the display are attained without increasing the depth of the accommodation portion of the refrigerator door, such that the insulation thickness of the door is not decreased.

As another embodiment of the present invention, an additional extendable arm can be disposed between the display and the accommodation portion to support the weight of the display more securely.

It will be apparent to those skilled in the art that various modifications and variations can be made in the present invention. Thus, it is intended that the present invention covers the modifications and variations of this invention provided they come within the scope of the appended claims and their equivalents.

## Claims

1. A refrigerator comprising:
a chamber kept at a low temperature;
a door selectively opening and closing the chamber;
an accommodation portion formed at an outer surface of the door;
a display extendable from the accommodation portion; and
at least one pair of extendable arms connected between the display and the accommodation portion.

2. The refrigerator according to claim 1, wherein the extendable arms are respectively connected to both sides of the accommodation portion.

3. The refrigerator according to claim 1, wherein the extendable arms are hinged to the display at the same position.

4. The refrigerator according to claim 1, wherein the extendable arms are symmetrical to each other.

5. The refrigerator according to any one of claims 1 to 4, further comprising a guide link connected between the accommodation portion and the extendable arms to enable the extendable arms to be extended bye the same length.

6. The refrigerator according to any one of claims 1 to 4, wherein the accommodation portion includes a mounting panel to which the extendable arms are connected.

7. The refrigerator according to any one of claims 1 to 4, further comprising a fixing bracket to which the extendable arms are connected at the same position, the fixing bracket having a front side on which the display is supported.

8. The refrigerator according to any preceding claim, wherein each of the extendable arms includes:
a side guide forming outside of the extendable arm; and
a side arm installed in the side guide, the side arm being extendable in a length direction of the side guide.

9. The refrigerator according to claim 8, wherein each of the extendable arms further includes an elastic member urging the side arm in the length direction of the side guide to extend the side arm.

10. The refrigerator according to claim 8, further comprising two guide links connecting the accommodation portion with the side arms, the two guide links having at least one gear mesh portion.
